# EUROPÄISCHE PATENTSCHRIFT

(11) **EP 3 149 406 B1**
(45) Veröffentlichungstag und Bekanntmachung des Hinweises auf die Patenterteilung: **03.02.2021**
(21) Anmeldenummer: 15788476.8
(22) Anmeldetag: 15.05.2015
(51) Int. Cl.: F23N 1/00

(54) **GASREGELVENTIL, KOCHSTELLE UND GASHERD**
GAS CONTROL VALVE, HOB AND GAS OVEN
SOUPAPE DE RÉGULATION DE GAZ, TABLE DE CUISSON ET CUISINIÈRE À GAZ

(30) Priorität: 28.05.2014 ES 201430797
(43) Veröffentlichungstag der Anmeldung: 05.04.2017
(73) Patentinhaber: BSH Hausgeräte GmbH, 81739 München (DE)
(72) Erfinder: PALACIOS VALDUEZA, Luis Antonio, E-39610 Astillero (ES); PLACER MARURI, Emilio, E-39120 Liencres (ES); SAIZ GONZALEZ, Roberto, E-39539 Santander (ES)
(86) Internationale Anmeldenummer: PCT/IB2015/053593
(87) Internationale Veröffentlichungsnummer: WO 2015/181669

(56) Entgegenhaltungen:
- EP-A2- 0 027 898
- WO-A1-2004/038267
- WO-A1-2007/020189
- WO-A2-2008/141916
- JP-A- 2014 081 108

## Beschreibung

Die vorliegende Erfindung betrifft ein Gasregelventil, eine Kochstelle und einen Gasherd.

Ein Gasregelventil für eine Gaskochstelle kann einen Ventilkörper umfassen, der in einem Ventilgehäuse aufgenommen ist. Zum Regeln eines Brenngasstroms, der durch das Gasregelventil hindurchströmt, ist der Ventilkörper in dem Ventilgehäuse drehbar aufgenommen. Der Ventilkörper kann von einer Schließstellung in eine Offenstellung gedreht werden und weiter über die Offenstellung hinaus in eine Kleinbrandstellung. Zwischen der Offenstellung und der Kleinbrandstellung ist der durch das Gasregelventil hindurchströmende Brenngasstrom stufenlos einstellbar. Es ist wünschenswert, dass zumindest zeitweise eine erhöhte Brennerleistung abrufbar ist.

Die DE 10 2010 030 944 A1 beschreibt ein Verfahren und einen Gasbackofen, bei dem zusätzlich zu einem Normalgasstrom ein Zusatzgasstrom einstellbar ist. Beide Gasströme werden demselben Gasbrenner zugeführt.

Die WO 2008/141916 A2 beschreibt ein Gasventil für einen Gasbrenner, der einen Innenbrenner und einen Außenbrenner umfasst. Der Brenngasvolumenstrom sowohl zu dem Innenbrenner als auch zu dem Außenbrenner ist jeweils stufenlos einstellbar.

Die EP 0 027 898 A2 beschreibt eine Gaszufuhrsteuerung eines mindestens eine Flamme aufweisenden Gasverbrauchers, insbesondere eines Gasherdes, mit zwei in der Gaszufuhrleitung hintereinander angeordneten Absperrorganen.

Vor diesem Hintergrund besteht eine Aufgabe der vorliegenden Erfindung darin, ein verbessertes Gasregelventil zur Verfügung zu stellen.

Demgemäß wird ein Gasregelventil für eine Kochstelle mit einem Ventilgehäuse und einem in dem Ventilgehäuse aufgenommenen Ventilkörper vorgeschlagen, wobei der Ventilkörper von einer Schließstellung, in der das Gasregelventil geschlossen ist, in einer vorbestimmten Drehrichtung in eine Offenstellung, in der das Gasregelventil geöffnet ist, drehbar ist, wobei der Ventilkörper in der vorbestimmten Drehrichtung von der Offenstellung weiter in eine Kleinbrandstellung drehbar ist, wobei ein Brenngasvolumenstrom, mit dem das Gasregelventil durchströmbar ist, beim Drehen des Ventilkörpers von der Offenstellung in die Kleinbrandstellung, insbesondere stufenlos, regelbar ist, wobei der Ventilkörper von der Offenstellung entgegen der vorbestimmten Drehrichtung in eine Boosterstellung drehbar ist, wobei der Brenngasvolumenstrom in der Boosterstellung größer als in der Offenstellung ist, wobei der Brenngasvolumenstrom in der Boosterstellung konstant ist. Die Boosterstellung ist entgegen der vorbestimmten Drehrichtung betrachtet zwischen der Offenstellung und der Schließstellung angeordnet.

Die Boosterstellung kann auch als Maximalbrand- oder Zusatzbrandstellung bezeichnet werden. Dadurch, dass der Ventilkörper von der Offenstellung in die Boosterstellung drehbar ist, kann im Vergleich zu bekannten Anordnungen auf einen Zusatzgasstrom verzichtet werden. Hierdurch ist ein einfacher und kostengünstiger Aufbau des Gasregelventils gewährleistet.

Der Brenngasvolumenstrom ist in der Boosterstellung konstant.

Im Gegensatz hierzu ist der Brenngasvolumenstrom beim Drehen des Ventilkörpers von der Offenstellung in die Minimalbrandstellung stufenlos oder gestuft regelbar.

Gemäß einer weiteren Ausführungsform weist das Gasregelventil eine Zeitschalteinrichtung auf, die dazu eingerichtet ist, den Ventilkörper nach Ablauf eines vorbestimmten Zeitintervalls selbsttätig von der Boosterstellung in die Offenstellung zu drehen.

Das vorbestimmte Zeitintervall beträgt vorzugsweise eine Minute, weiter bevorzugt 30 Sekunden. Hierdurch ist es möglich, kurzzeitig eine erhöhte Brennerleistung, beispielsweise zum Erhitzen einer größeren Menge Wasser, abzufordern.

Gemäß einer weiteren Ausführungsform ist der Ventilkörper zum Drehen von der Offenstellung in die Boosterstellung in das Ventilgehäuse hineindrückbar.

Insbesondere kann der Ventilkörper nur dann von der Offenstellung in die Boosterstellung gedreht werden, wenn dieser gleichzeitig in das Ventilgehäuse hineingedrückt wird. Hierdurch wird ein ungewolltes Verdrehen in die Boosterstellung zuverlässig verhindert.

Gemäß einer weiteren Ausführungsform weist das Gasregelventil eine Federeinrichtung auf, wobei der Ventilkörper gegen eine Federkraft der Federeinrichtung in das Ventilgehäuse hineindrückbar ist.

Insbesondere kann der Ventilkörper nur dann von der Offenstellung in die Boosterstellung gedreht werden, wenn dieser gleichzeitig in das Ventilgehäuse hineingedrückt wird. Hierdurch wird ein ungewolltes Verdrehen in die Boosterstellung zuverlässig verhindert.

Gemäß einer weiteren Ausführungsform weist das Gasregelventil eine Federeinrichtung auf, wobei der Ventilkörper gegen eine Federkraft der Federeinrichtung in das Ventilgehäuse hineindrückbar ist.

Die Federeinrichtung ist vorzugsweise eine Spiralfeder. Insbesondere ist die Federeinrichtung eine Druckfeder. Die Federeinrichtung ist zwischen einem an dem Ventilkörper vorgesehenen Absatz und dem Ventilgehäuse angeordnet.

Gemäß einer weiteren Ausführungsform ist der Ventilkörper in der Federeinrichtung aufnehmbar.

Hierdurch ist ein platzsparender Aufbau des Gasregelventils gewährleistet. Die Federeinrichtung ist dazu eingerichtet, den Ventilkörper aus dem Ventilgehäuse herauszudrücken.

Gemäß einer weiteren Ausführungsform ist das Ventilgehäuse an einer Hauptgasleitung der Kochstelle anklemmbar.

Hierdurch ist eine schnelle und einfache Montage des Ventilgehäuses an der Hauptgasleitung möglich.

Gemäß einer weiteren Ausführungsform ist der Ventilkörper rohrförmig.

Insbesondere hat der Ventilkörper eine hohlzylinderförmige Geometrie. An dem Ventilkörper ist eine Gasdurchlassöffnung vorgesehen, durch die in der Offenstellung, in der Kleinbrandstellung und in der Boosterstellung Brenngas strömt. In der Schließstellung ist die Gasdurchlassöffnung von dem Ventilgehäuse überdeckt.

Weiterhin wird eine Kochstelle mit einem derartigen Gasregelventil vorgeschlagen.

Die Kochstelle ist insbesondere eine Gaskochstelle. Die Kochstelle ist insbesondere Bestandteil eines Haushaltsgeräts.

Weiterhin wird ein Gasherd mit einem derartigen Gasregelventil und/oder einer derartigen Kochstelle vorgeschlagen.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Gasregelventils, der Kochstelle und/oder des Gasherds hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische perspektivische Ansicht einer Ausführungsform einer Gaskochstelle;
- Fig. 2: zeigt eine schematische Aufsicht der Gaskochstelle gemäß der Fig. 1;
- Fig. 3: zeigt eine schematische perspektivische Ansicht einer Ausführungsform eines Gasregelventils der Gaskochstelle gemäß der Fig. 1;
- Fig. 4: zeigt eine schematische perspektivische Explosionsansicht des Gasregelventils gemäß der Fig. 3;
- Fig. 5: zeigt eine weitere schematische perspektivische Explosionsansicht des Gasregelventils gemäß der Fig. 3;
- Fig. 6: zeigt eine schematische perspektivische Ansicht eines Ventilkörpers des Gasregelventils gemäß der Fig. 3; und
- Fig. 7A - 7D: zeigen schematisch verschiedene Positionen eines Betätigungsknopfs des Gasventils gemäß der Fig. 3.

In den Figuren sind gleiche oder funktionsgleiche Elemente mit denselben Bezugszeichen versehen worden, sofern nichts anderes angegeben ist.

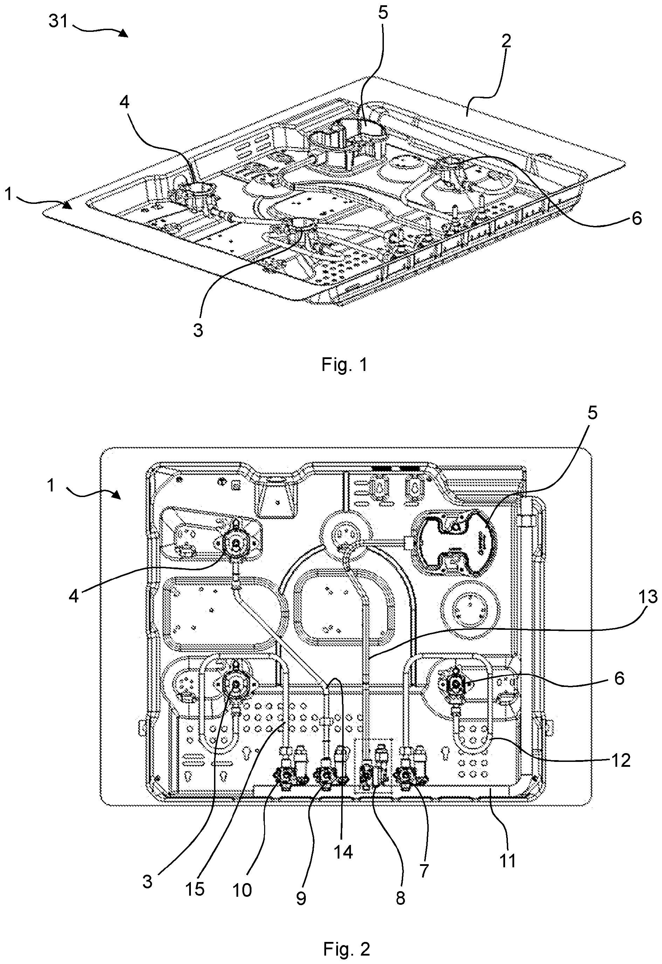

Die Fig. 1 zeigt eine schematische perspektivische Ansicht einer Kochstelle, insbesondere einer Gaskochstelle 1. Die Fig. 2 zeigt eine schematische Aufsicht der Gaskochstelle 1. Die Gaskochstelle 1 weist ein wannenförmiges Bodenblech 2 auf, in dem Gasbrenner 3 bis 6 zumindest teilweise aufgenommen sind. Jedem Gasbrenner 3 bis 6 ist ein Gasregelventil 7 bis 10 zugeordnet. Die Gasregelventile 7 bis 10 sind an einer Gashauptleitung 11 angeordnet. Die Gasregelventile 7 bis 8 sind über Zufuhrleitungen 12 bis 15 mit den jeweiligen Gasbrennern 3 bis 6 fluidisch verbunden. Die Gasregelventile 7 bis 10 sind dazu eingerichtet, einen von der Gashauptleitung 11 zu dem jeweiligen Gasbrenner 3 bis 6 strömenden Brenngasvolumenstrom, insbesondere stufenlos, zu regeln.

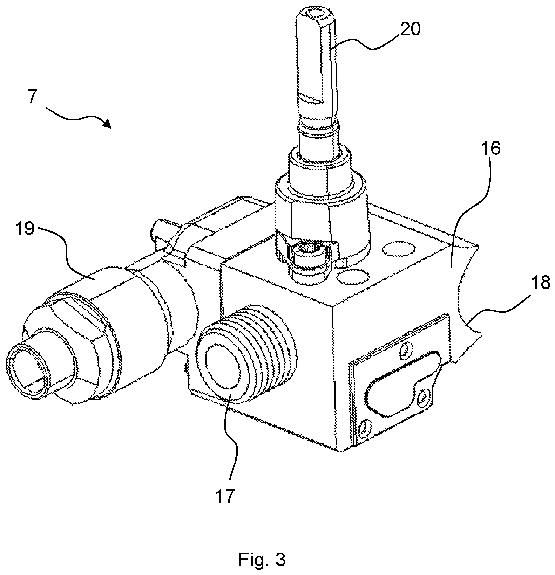

Die Fig. 3 zeigt in einer schematischen perspektivischen Ansicht eine Ausführungsform des Gasregelventils 7. Die Gasregelventile 8 bis 10 sind vorzugsweise analog dem Gasregelventil 7 aufgebaut. Zur Vereinfachung wird daher im Folgenden lediglich auf das Gasregelventil 7 Bezug genommen. Das Gasregelventil 7 weist ein Ventilgehäuse 16 auf. Das Ventilgehäuse 16 umfasst einen Gasauslass 17, über den dem jeweiligen Gasbrenner 3 bis 6 mit Hilfe der entsprechenden Zufuhrleitung 12 bis 15 Brenngas zuführbar ist. Das Ventilgehäuse 16 weist ferner einen Aufnahmeabschnitt 18 auf, der dazu eingerichtet ist, die Gashauptleitung 11 zumindest teilweise zu umgreifen. Das heißt, das Ventilgehäuse 16 kann in dem Aufnahmeabschnitt 18 die Gashauptleitung 11 zumindest teilweise aufnehmen. An dem Aufnahmeabschnitt 18 ist ein nicht dargestellter Gaseinlass vorgesehen, durch den Brenngas von der Gashauptleitung 11 dem Ventilgehäuse 16 zuführbar ist. Das Gasregelventil 7 kann mit Hilfe des Aufnahmeabschnitts 18 an der Gashauptleitung 11 festgeklemmt sein.

An dem Ventilgehäuse 16 ist eine Thermoelementaufnahme 19 vorgesehen. Die Thermoelementaufnahme 19 ist mit einem dem jeweiligen Gasbrenner 3 bis 6 zugeordneten Thermoelement derart verbunden, dass mit Hilfe des Thermoelements eine Flammenüberwachung der Gasbrenner 3 bis 6 möglich ist. Das heißt, bei einem Erlöschen der Gasflamme sperrt das Gasregelventil 7 den Brenngasstrom zu dem jeweiligen Gasbrenner 3 bis 6, so dass kein Brenngas mehr von dem Gasregelventil 7 zu dem Gasbrenner 3 bis 6 strömt. Oberseitig aus dem Ventilgehäuse 16 ragt ein Betätigungsschaft 20 heraus. An dem Betätigungsschaft 20 kann beispielsweise ein Drehknopf zur Betätigung desselben vorgesehen sein.

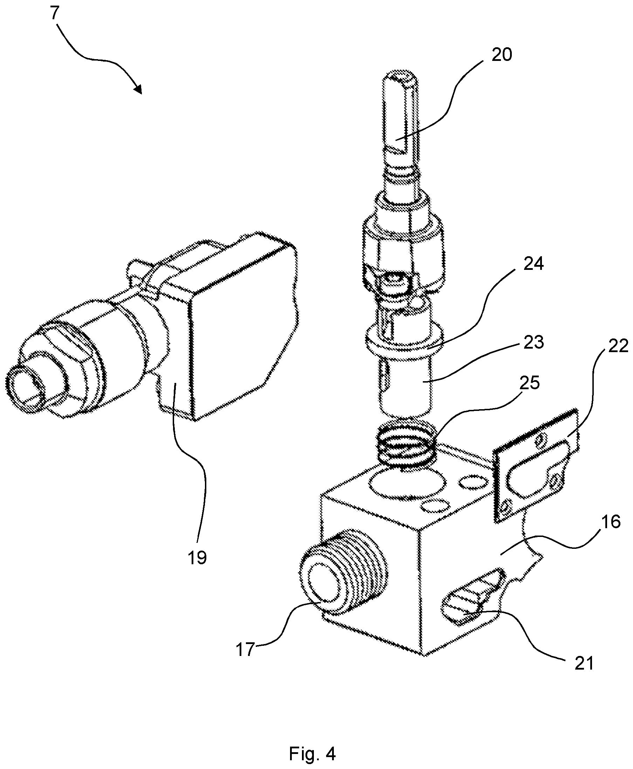

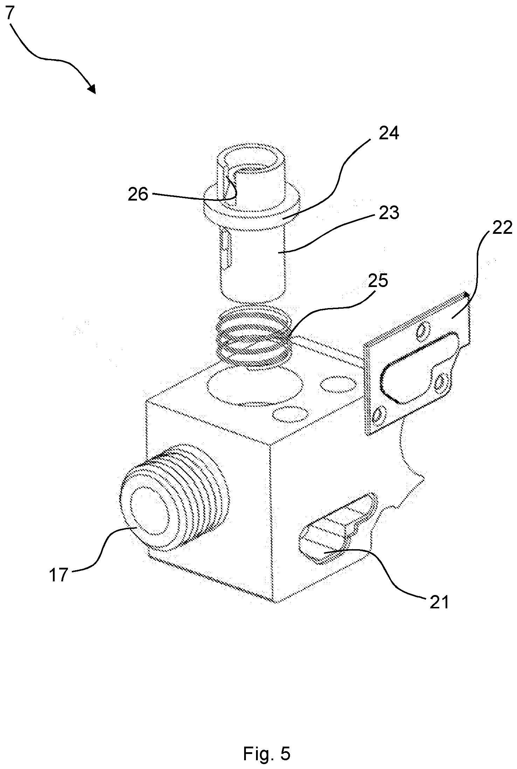

Die Fig. 4 und 5 zeigen das Gasregelventil 7 jeweils in einer schematischen perspektivischen Explosionsansicht. Die Thermoelementaufnahme 19 ist vorzugsweise von dem Ventilgehäuse 16 abnehmbar gestaltet. Seitlich an dem Ventilgehäuse 16 ist eine Ausnehmung 21 vorgesehen. Die Ausnehmung 21 ist mit in dem Ventilgehäuse 16 vorgesehenen Brenngaskanälen fluidisch verbunden. Die Ausnehmung 21 ist mit Hilfe einer Abdeckung 22 fluiddicht verschließbar.

In dem Ventilgehäuse 16 ist ein Ventilkörper 23 drehbar aufgenommen. Der Ventilkörper 23 ist rohrförmig und weist einen umlaufenden Absatz 24 auf. Zwischen dem Absatz 24 und dem Ventilgehäuse 16 ist eine Federeinrichtung 25 positioniert. Die Federeinrichtung 25 umgreift den rohrförmigen Ventilkörper 23 zumindest abschnittsweise. Die Federeinrichtung 25 ist vorzugsweise eine Druckfeder. Die Federeinrichtung 25 spannt den Ventilkörper 23 derart vor, dass dieser von der Federeinrichtung 25 aus dem Ventilgehäuse 16 herausgedrückt wird.

Wie die Fig. 5 zeigt, ist an dem Ventilkörper 23 ein Betätigungsschlitz 26 vorgesehen, in den ein entsprechender Eingriffsabschnitt des Betätigungsschafts 20 formschlüssig eingreift.

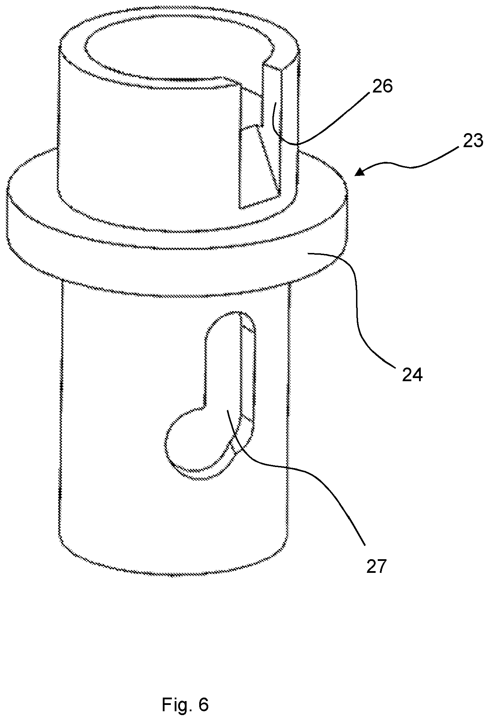

Die Fig. 6 zeigt in einer schematischen perspektivischen Ansicht den Ventilkörper 23. Der Ventilkörper 23 weist eine Gasdurchflussöffnung 27 auf. Die Gasdurchflussöffnung 27 überschneidet sich beim Verdrehen des Ventilkörpers 23 in dem Ventilgehäuse 16 mit den in dem Ventilgehäuse 16 vorgesehenen Gaskanälen.

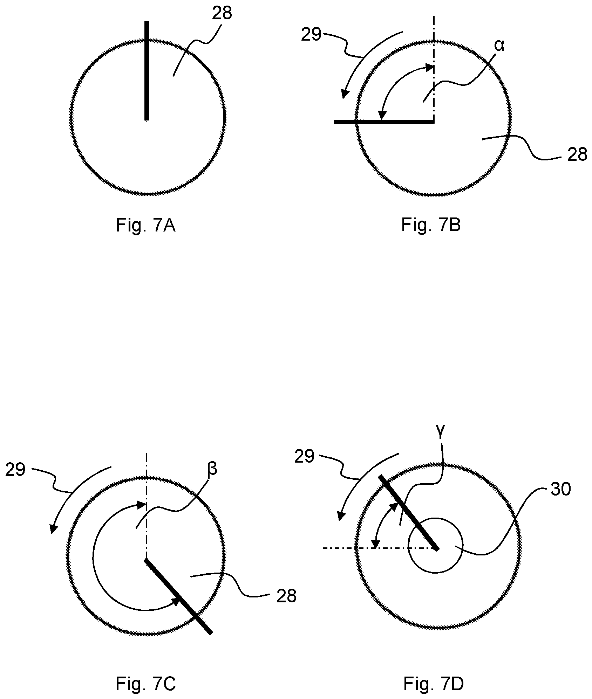

Die Funktionsweise des Gasregelventils 7 wird im Folgenden anhand der Fig. 7A - 7D erläutert. Die Fig. 7A - 7D zeigen jeweils einen mit dem Betätigungsschaft 20 des Gasregelventils 7 gekoppelten Betätigungsknopfs 28 in verschiedenen Positionen. Die Fig. 7A zeigt den Betätigungsknopf 28 in einer Position, in der der Ventilkörper 23 in einer Schließstellung ist. In der Schließstellung ist das Gasregelventil 7 geschlossen und die Gasdurchflussöffnung 27 ist vollständig von dem Ventilgehäuse 16 abgedeckt. Wie die Fig. 7B zeigt, kann der Ventilkörper 23 von der Schließstellung, in der das Gasregelventil 7 geschlossen ist, in einer vorbestimmten Drehrichtung 29 in eine Offenstellung, in der das Gasregelventil 7 geöffnet ist, gedreht werden. Die vorbestimmte Drehrichtung 29 ist beispielsweise entgegen dem Uhrzeigersinn orientiert. Ein Drehwinkel α zwischen der Schließstellung und der Offenstellung beträgt beispielsweise 90°.

Wie die Fig. 7C zeigt, kann der Betätigungsknopf 28 in der bevorzugten Drehrichtung 29 von der Offenstellung weiter in eine Kleinbrandstellung gedreht werden. Ein Winkel β zwischen der Schließstellung und der Kleinbrandstellung beträgt beispielsweise 210°. Durch ein Drehen von der in der Fig. 7B gezeigten Offenstellung in die in der Fig. 7C gezeigte Kleinbrandstellung ist das Gasregelventil 7 stufenlos regelbar. Zum Verbringen des Gasregelventils 7 von der Kleinbrandstellung in die Schließstellung wird der Betätigungsknopf 28 entgegen der vorbestimmten Drehrichtung 29 wieder in die in der Fig. 7A gezeigte Schließstellung gedreht.

Weiterhin kann, wie in der Fig. 7D gezeigt, der Ventilkörper 23 von der Offenstellung entgegen der vorbestimmten Drehrichtung 29 in eine sogenannte Boosterstellung oder Maximalbrandstellung drehbar sein. Ein Drehwinkel γ zwischen der Offenstellung und der Boosterstellung beträgt beispielsweise 30°. In der Boosterstellung ist ein durch das Gasregelventil 7 strömender Brenngasvolumenstrom größer als in der Offenstellung. Der Brenngasvolumenstrom in der Boosterstellung ist konstant und nicht stufenlos einstellbar. Zum Drehen des Ventilkörpers 23 von der in Fig. 7B gezeigten Offenstellung in die in der Fig. 7D gezeigte Boosterstellung ist der Ventilkörper 23 gegen eine Federkraft der Federeinrichtung 25 in das Ventilgehäuse 16 hineindrückbar. Das heißt, der Ventilkörper 23 kann nur dann in die Boosterstellung gedreht werden wenn dieser entgegen der Federkraft der Federeinrichtung 25 in das Ventilgehäuse 16 eingedrückt wird. In dem Ventilgehäuse 16 kann ein Boostergaskanal vorgesehen sein, der die Gasdurchflussöffnung 27 des Ventilkörpers 23 direkt mit dem Gasauslass 17 fluidisch verbindet.

Das Gasregelventil 7 kann weiterhin eine Zeitschalteinrichtung 30 aufweisen, die dazu eingerichtet ist, den Ventilkörper 23 nach Ablauf eines vorbestimmten Zeitintervalls selbsttätig von der in der Fig. 7D gezeigten Boosterstellung in die in der Fig. 7B gezeigte Offenstellung zu drehen. Das vorbestimmte Zeitintervall beträgt beispielsweise 30 Sekunden.

Ein Gasherd 31 (Fig. 1) kann ein oder mehrere wie zuvor beschriebene Gasregelventile 7 bis 10 und/oder eine derartige Gaskochstelle 1 aufweisen.

Obwohl die vorliegende Erfindung anhand von Ausführungsbeispielen beschrieben wurde, ist sie vielfältig modifizierbar.

### Verwendete Bezugszeichen:

- 1: Kochstelle
- 2: Bodenblech
- 3: Gasbrenner
- 4: Gasbrenner
- 5: Gasbrenner
- 6: Gasbrenner
- 7: Gasregelventil
- 8: Gasregelventil
- 9: Gasregelventil
- 10: Gasregelventil
- 11: Gashauptleitung
- 12: Zufuhrleitung
- 13: Zufuhrleitung
- 14: Zufuhrleitung
- 15: Zufuhrleitung
- 16: Ventilgehäuse
- 17: Gasauslass
- 18: Aufnahmeabschnitt
- 19: Thermoelementaufnahme
- 20: Betätigungsschaft
- 21: Ausnehmung
- 22: Abdeckung
- 23: Ventilkörper
- 24: Absatz
- 25: Federeinrichtung
- 26: Betätigungsschlitz
- 27: Gasdurchflussöffnung
- 28: Betätigungsknopf
- 29: Drehrichtung
- 30: Zeitschalteinrichtung
- 31: Gasherd
- α: Drehwinkel
- β: Drehwinkel
- γ: Drehwinkel

## Patentansprüche

1. Gasregelventil (7 - 10) für eine Kochstelle (1), mit einem Ventilgehäuse (16) und einem in dem Ventilgehäuse (16) aufgenommenen Ventilkörper (23), wobei der Ventilkörper (23) von einer Schließstellung, in der das Gasregelventil (7 - 10) geschlossen ist, in einer vorbestimmten Drehrichtung (29) in eine Offenstellung, in der das Gasregelventil (7 - 10) geöffnet ist, drehbar ist, wobei der Ventilkörper (23) in der vorbestimmten Drehrichtung (29) von der Offenstellung weiter in eine Kleinbrandstellung drehbar ist, wobei ein Brenngasvolumenstrom, mit dem das Gasregelventil (7 - 10) durchströmbar ist, beim Drehen des Ventilkörpers (23) von der Offenstellung in die Kleinbrandstellung, insbesondere stufenlos, regelbar ist, wobei der Ventilkörper (23) von der Offenstellung entgegen der vorbestimmten Drehrichtung (29) in eine Boosterstellung drehbar ist, wobei der Brenngasvolumenstrom in der Boosterstellung größer als in der Offenstellung ist, wobei der Brenngasvolumenstrom in der Boosterstellung konstant ist, und wobei die Boosterstellung entgegen der vorbestimmten Drehrichtung (29) betrachtet zwischen der Offenstellung und der Schließstellung angeordnet ist.

2. Gasregelventil nach Anspruch 1, **gekennzeichnet durch** eine Zeitschalteinrichtung (30), die dazu eingerichtet ist, den Ventilkörper (23) nach Ablauf eines vorbestimmten Zeitintervalls selbsttätig von der Boosterstellung in die Offenstellung zu drehen.

3. Gasregelventil nach Anspruch 1 oder 2, **dadurch gekennzeichnet, dass** der Ventilkörper (23) zum Drehen von der Offenstellung in die Boosterstellung in das Ventilgehäuse hineindrückbar ist.

4. Gasregelventil nach Anspruch 3, **gekennzeichnet durch** eine Federeinrichtung (25), wobei der Ventilkörper (23) gegen eine Federkraft der Federeinrichtung (25) in das Ventilgehäuse (16) hineindrückbar ist.

5. Gasregelventil nach Anspruch 3 oder 4, **dadurch gekennzeichnet, dass** der Ventilkörper (23) in der Federeinrichtung (25) aufnehmbar ist.

6. Gasregelventil nach einem der Ansprüche 1 - 5, **dadurch gekennzeichnet, dass** das Ventilgehäuse (16) an eine Gashauptleitung (11) der Kochstelle (1) anklemmbar ist.

7. Gasregelventil nach einem der Ansprüche 1 - 6, wobei der Ventilkörper (23) rohrförmig ist.

8. Kochstelle (1) mit einem Gasregelventil (7 - 10) nach einem der Ansprüche 1 - 7.

9. Gasherd (31) mit einem Gasregelventil (7 - 10) nach einem der Ansprüche 1 - 7 und/oder einer Kochstelle (1) nach Anspruch 8.

## Claims

1. Gas control valve (7 - 10) for a hob (1), having a valve housing (16) and a valve body (23) accommodated in the valve housing (16), wherein the valve body (23) can be rotated in a predetermined direction of rotation (29) from a closed position, in which the gas control valve (7 - 10) is closed, into an open position, in which the gas control valve (7 - 10) is open, wherein the valve body (23) can be rotated in the predetermined direction of rotation (29) beyond the open position into a low-flame position, wherein when the valve body (23) is rotated from the open position into the low-flame position, a flow volume of combustion gas that can flow through the gas control valve (7 - 10) can be controlled, in particular continuously, wherein the valve body (23) can be rotated against the predetermined direction of rotation (29) from the open position into a booster position and wherein the flow volume of combustion gas is greater in the booster position than in the open position, wherein the flow of combustion gas is constant in the booster position, and wherein viewed against the predetermined direction of rotation (29), the booster position is arranged between the open position and the closed position.

2. Gas control valve according to claim 1, **characterised by** a timer device (30), which is designed to rotate the valve body (23) automatically from the booster position into the open position after a predetermined time interval has elapsed.

3. Gas control valve according to claim 1 or 2, **characterised in that** the valve body (23) can be pressed into the valve housing in order to rotate from the open position into the booster position.

4. Gas control valve according to claim 3, **characterised by** a spring device (25), wherein the valve body (23) can be pressed into the valve housing (16) against a spring force of the spring device (25).

5. Gas control valve according to claim 3 or 4, **characterised in that** the valve body (23) can be accommodated in the spring device (25).

6. Gas control valve according to one of claims 1 - 5, **characterised in that** the valve housing (16) can be attached to a main gas line (11) of the hob (1).

7. Gas control valve according to one of claims 1 - 6, wherein the valve body (23) is tubular.

8. Hob (1) with a gas control valve (7 - 10) according to one of claims 1 - 7.

9. Gas oven (31) with a gas control valve (7 - 10) according to one of claims 1 - 7 and/or a hob (1) according to claim 8.

## Revendications

1. Soupape de régulation de gaz (7 - 10) pour un poste de cuisson (1), avec un carter de soupape (16) et un corps de soupape (23) logé dans le carter de soupape (16), dans laquelle le corps de soupape (23) peut tourner d'une position fermée dans laquelle la soupape de régulation de gaz (7 - 10) est fermée, selon un sens de rotation (29) préalablement établi, vers une position ouverte dans laquelle la soupape de régulation de gaz (7 - 10) est ouverte, dans laquelle le corps de soupape (23) peut en outre tourner, selon le sens de rotation (29) préalablement établi, de la position ouverte vers une position de feux doux, dans laquelle un débit de gaz combustible pouvant traverser la soupape de régulation de gaz (7 - 10) peut en particulier être réglé en continu en tournant le corps de soupape (23) de la position ouverte vers la position à feux doux, dans laquelle le corps de soupape (23) peut tourner de la position ouverte à l'encontre du sens de rotation (29) préalablement établi vers une position boost, dans laquelle le débit du gaz combustible dans la position boost est supérieur à celui dans la position ouverte, dans laquelle le débit de gaz combustible dans la position boost est constant et dans lequel la position boost est disposée, vu à l'encontre du sens de rotation (29) préalablement établi, entre la position ouverte et la position fermée.

2. Soupape de régulation de gaz selon la revendication 1, **caractérisée par** un dispositif interrupteur horaire (30) aménagé afin de tourner de façon autonome le corps de soupape (23) de la position boost vers la position ouverte après l'écoulement d'un intervalle de temps préalablement établi.

3. Soupape de régulation de gaz selon la revendication 1 ou 2, **caractérisée en ce que** le corps de soupape (23) peut être inséré dans la carcasse de soupape pour la rotation de la position ouverte vers la position boost.

4. Soupape de régulation de gaz selon la revendication 3, **caractérisée par** un dispositif élastique (25), dans laquelle le corps de soupape (23) peut être inséré dans le carter de soupape (16) à l'encontre d'une force de ressort du dispositif élastique (25).

5. Soupape de régulation de gaz selon la revendication 3 ou 4, **caractérisée en ce que** le corps de soupape (23) peut être logé dans le dispositif élastique (25).

6. Soupape de régulation de gaz selon l'une des revendications 1 à 5, **caractérisée en ce que** le carter de soupape (16) peut être attaché à une conduite principale de gaz (11) du poste de cuisson (1).

7. Soupape de régulation de gaz selon l'une des revendications 1 à 6, dans laquelle le corps de soupape (23) est tubulaire.

8. Poste de cuisson (1) avec une soupape de régulation de gaz (7 - 10) selon l'une des revendications 1 à 7.

9. Cuisinière à gaz (31) avec une soupape de régulation de gaz (7 - 10) selon l'une des revendications 1 à 7 et/ou un poste de cuisson (1) selon la revendication 8.
